# EUROPEAN PATENT APPLICATION

(11) **EP 2 420 941 A1**
(43) Date of publication of application: **22.02.2012**
(21) Application number: 10008721.2
(22) Date of filing: 20.08.2010
(51) Int. Cl.: G06F 17/30

(54) **System and method for providing object-related information**

(71) Applicant: Deutsche Telekom AG, 53113 Bonn (DE)
(72) Inventor: Kölln, Florian, 12163 Berlin (DE); Piratla, Nischal, Fremont, CA 94538 (US); Wischnowsky, Sven, 10777 Berlin (DE); Swaminathan, Rahul, 10119 Berlin (DE); Wolf, Ingo, 13187 Berlin (DE); Wegner, Susan, 13589 Berlin (DE); Schwaiger, Roland, 12159 Berlin (DE)
(74) Representative: Kampfenkel, Klaus

(57) **Abstract**

To enable a new and improved way for providing object-related information, and in particular for assist the user of a mobile communication device in the process of car scouting the invention proposes a system (10) which comprises a mobile communication device (100) having a camera (110), a query processing device (200, 300) connectable to said mobile communication device (100) via a communication network, and a first database (400) comprising object-related information of objects belonging to pre-defined object classes, wherein said first database is accessible by said query processing device (200, 300), wherein the mobile communication device (100) is adapted for transmitting a query (600) to the query processing device (200, 300), wherein said query (600) comprises image information (620) which comprises at least one captured image or a pre-processing result of at least one captured image.

The invention further proposes a method, a query processing device and a mobile communication device.

## Description

### Field of the invention

The invention generally relates to object recognition, and in particular to a system and a method for providing object-related information.

### Background of the invention

When buying a car today cars for sale are typically found by using online forms or portals, such as for instance the website "www.vehix.com" or a similar website, where users who are selling and/or buying cars can post and/or retrieve information about the cars for sale. Alternatively a potential buyer can visit a dealer's website and get the quotes via email. The number of mobile communication devices which provide access to the Internet is constantly increasing. With such a mobile internet-capable device the above described websites can also be accessed, when a person sees a car he or she likes while on the go. However, when seeing a parked car or a car passing by, the make and model of the car often is not recognized, so that a search in the Internet is not possible.

Mobile communication devices such as mobile telephones are also increasingly equipped with an integrated camera. Certain services are known which make use of this additional functionality and which utilize object recognition or face recognition techniques.

In US 2005/0185060 A1 for instance an image based inquiry system is described, wherein images are sent as queries from a mobile telephone with integrated camera to a server computer. In the server computer an image recognition process is run that converts the image information into symbolic information, for example, plain text. A search engine uses the symbolic information to find information about the image and sends it back to the mobile telephone.

From US 7 428 321 B1 an internet hosted system is known for identifying similar characteristics among two individuals using facial recognition, wherein an image is sent to an image classification server and compared to images in an image database for finding the closest match, for instance for the purpose of determining which celebrity most resembles the image that was sent.

It is an object of the present invention to show a new and improved way for providing object-related information, in particular by utilizing a mobile communication device having a camera. Another object of the invention is to assist a person in the process of purchasing a vehicle.

### Summary of the Invention

The inventive solution of the object is achieved by each of the subject matter of the respective attached independent claims. Advantageous and/or preferred embodiments or refinements are the subject matter of the respective attached dependent claims.

Accordingly, an inventive system for providing object-related information comprises a mobile communication device having a camera, a query processing device connectable to said mobile communication device via a communication network, and a first database comprising object-related information of objects belonging to pre-defined object classes, wherein said first database is accessible by said query processing device. The mobile communication device is adapted for transmitting a query to the query processing device, wherein said query comprises image information which comprises at least one captured image or a pre-processing result of at least one captured image. The query processing device comprises query processing means for processing a query received from the mobile communication device, image processing means which is adapted to recognize an object as belonging to an individual object class based on image information, and information retrieval means adapted for accessing said first database, retrieving object-related information of objects belonging to said individual object class and providing the retrieved object-related information to the mobile communication device.

A main idea of the invention is to determine an object class to which an object belongs, wherein the object is recognized by means of image recognition, to identify other objects belonging to the same object class and to provide information related to these other objects.

In a preferred embodiment the objects are vehicles, the object classes are vehicle models and the object-related information comprises sales information of at least one vehicle. For example, based on an image of a vehicle this vehicle is recognized as a certain model and for at least one vehicle of the same model which is currently for sale the price of the vehicle and the identity of the seller are provided, preferably along with additional information such as equipment, year of manufacture and/or mileage of the vehicle for sale. In this embodiment the vehicles typically are cars, but can also be any other type of vehicle.

The invention accordingly provides a solution for the element of liking a car while on the go by retrieving relevant information such as sale price and even competitive offerings of a car of the same model.

Advantageously the mobile communication device is adapted for pre-processing at least one captured image and for transmitting image information which comprises the result of said pre-processing. For example, feature vectors are derived from a captured image based on a pre-defined image recognition technique. That way the computational load for image recognition is partly transferred to the mobile communication device resulting in a faster response time for a query. Pre-processing within the mobile communication device is enabled by a constantly increasing computational power of mobile and hand-held communication devices.

In a preferred embodiment the system further comprises a second database for storing user-related information, wherein the information retrieval means is adapted for accessing said second database in response to a user identification in a query, retrieving from said second database individual user-related information based on the user identification, and selecting and/or filtering the object-related information to be provided to the mobile communication device based on the individual user-related information. The second database preferably is utilized to store user profiles, in particular comprising user-specific preferences and/or a history of results of previous user-specific queries. Based on the user profiles advantageously personalized offers can be provided to the user of the mobile communication device. Such offers can be provided in response to a query transmitted by the mobile communication device, but also independent of a query. For instance can offers be provided to the user of the mobile communication device based on the user's profile on a regular basis or in response to a new offer stored in the first database which matches an individual user's preferences based on the respective user profile.

In a further preferred embodiment the mobile communication device is adapted to generate image-related information, wherein a query comprises said image-related information and the information retrieval means is adapted for selecting and/or filtering the object-related information to be provided to the mobile communication device based on the image-related information. The image-related information can preferably comprise the date and time when the image was captured, the absolute location of the mobile communication device at the time the image was captured and/or information on the location of the mobile communication device relative to an object of which an image is captured. Image-related information can also with advantage be provided by the user of the mobile communication device, wherein the user for instance provides the information that a captured image is a front, back or side view of an object or that an image has been captured under a certain angle to the object. The image-related information can also be stored together with one or more corresponding captured images, so that a query based on these captured images can be sent at a later time.

A method for providing object-related information comprises the steps of capturing at least one image of at least one first object with a mobile communication device having a camera, transmitting a query which comprises image information from the mobile communication device to a query processing device, wherein said image information comprises the at least one captured image or a result of pre-processing the at least one captured image, processing the transmitted image information to determine an estimated object class to which the first object belongs, retrieving object-related information of at least one second object belonging to the determined object class from a first database, and transmitting said object-related information to the mobile communication device.

In a preferred embodiment the first and second objects are vehicles, the object class is a vehicle model and the object-related information comprises sales information of at least one vehicle.

For balancing the computational load between mobile communication device and query processing device with advantage at least one captured image is pre-processed by the mobile communication device and image information which comprises the result of said pre-processing is transmitted.

For enabling a personalized recommendation service the method preferably further comprises the steps of storing user-related information in a second database, retrieving from said second database individual user-related information based on a user identification provided in a query, and selecting and/or filtering the object-related information to be transmitted to the mobile communication device based on the individual user-related information, wherein said user-related information in particular comprises user-specific preferences and/or a history of results of previous user-specific queries.

With advantage the method further comprises the steps of generating image-related information by the mobile communication device, transmitting a query which comprises said image-related information from the mobile communication device to the query processing device, and selecting and/or filtering the object-related information to be transmitted to the mobile communication device based on the image-related information, wherein said image-related information preferably comprises information on the absolute location of the mobile communication device at the time an image was captured and/or information on the location of the mobile communication device relative to an object of which an image is captured.

The location information can for instance be utilized to only provide those car sale offers to the user of the mobile communication device of which the seller's location is within a user-defined distance from the location of the mobile communication device at the time the image is captured or at the time the query is sent to the query processing device.

For the purpose of determining location information the mobile communication device preferably is connectable to a cell-based mobile communication network and adapted to determine information about neighboring cells of the mobile communication device at the time an image is captured. From this cell information location information can be derived by triangulation techniques, typically by utilizing a respective service provided by a central server of the communication network. In order to generate location information of higher precision the mobile communication device is preferably provided with a GPS (Global Positioning System) receiver, so that a query may comprise information about the geographical location of the mobile communication device at the time an image was captured, which is based on GPS data received by the mobile communication device.

A solution of the object of the invention is also achieved by a query processing device which comprises query processing means for processing a query received from a mobile communication device, wherein said query comprises image information, image processing means which is adapted to recognize an object as belonging to an individual object class based on said image information, and information retrieval means adapted for accessing a first database which comprises object-related information of objects belonging to pre-defined object classes, retrieving object-related information of objects belonging to said individual object class, and providing the retrieved object-related information to the mobile communication device.

Furthermore, a solution of the object of the invention is achieved by a mobile communication device which comprises a camera for capturing images, a user interface for entering at least one parameter related to an image and/or for providing instructions to a user for capturing an image, and means for transmitting a query to a query processing device, wherein said query comprises image information which comprises at least one captured image or a pre-processing result of at least one captured image.

The inventive method can with advantage be implemented by means of a software. In particular the user interface of the mobile communication device can be provided as a software program. The mobile communication device accordingly preferably comprises a microprocessor adapted to execute a software program stored in the device, which comprises electronically readable control instructions adapted to execute a method as described above. Accordingly also a respective software and a digital storage medium with said software stored thereon lie within the scope of the invention.

### Brief Description of the Figures

It is shown in
- Fig. 1: schematically the components of a preferred embodiment of an inventive system, and
- Fig. 2: schematically a user interface of a mobile communication device according to a preferred embodiment of the invention.

### Detailed Description of the Invention

Subsequently, preferred but exemplar embodiments of the invention are described in more detail with regard to the figures. Same reference numbers indicate same or similar components.

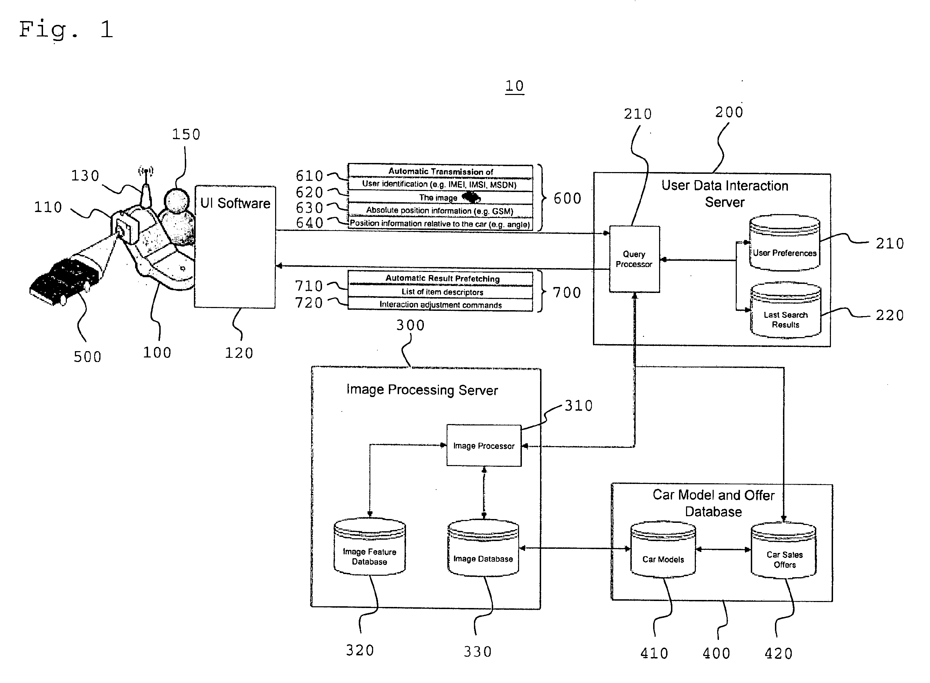

In Fig. 1 schematically the components of a preferred embodiment of an inventive system 10 is shown which is adapted to perform a preferred embodiment of the inventive method.

In the shown embodiment a mobile phone 100 is used to capture an image of a car 500, which is parked or which is passing by, using the camera 110 which is integrated in the mobile phone 100. Any relevant information about the vehicle 500 including offers related to such a car and or any other cars close to it is presented to the user 150 of the mobile phone 100, wherein the offers preferably are based on the user's profile and contextual information, such as location. The retrieval is further tied to selling proposition.

In the following the main components and operations of the system 10 are described.

The system 10 comprises a mobile phone 100 and a query processing device which in the shown embodiment comprises a user data interaction server 200 and an image processing server 300. The servers 200 and 300 are interconnected and further connected to a car model and offer database 400. The mobile phone 100 is connectable to the user data interaction server 200 via a wireless communication network such as GSM or UMTS. For this purpose the mobile phone 100 is provided with a transceiver 130. The mobile phone 100 comprises a camera 110 and a user interface 120. In the mobile phone 100 a user identification is stored which identifies the user 150. The mobile phone 100 may further comprise a GPS receiver, not shown in Fig. 1.

The user data interaction server 200 comprises a query processor 210 for communicating with the mobile phone 100, in particular for receiving queries 600 from the mobile phone 100 and to transmit a result 700 of a query 600 to the mobile phone 100.

The car model and offer database 400 comprises stored car sales offers 420 and stored car model descriptions 410. Since each car sale offer is associated with a certain car model, storage units 410 and 420 are interconnected.

The image processing server 300 comprises an image processor 310 which is adapted to recognize a car model from an image captured by the camera 110 of the mobile phone 100. The image recognition is performed by matching the features of the captured image with the features of images stored in an image database 330. The images in the image database 330 are respectively associated with a corresponding car model and accordingly the image database 330 is connected to the stored car model descriptions 410. Features extracted from the images are stored in an image feature database 320. For recognition purposes the image processor 310 is connected to the databases 320 and 330.

The user data interaction server 200 preferably further comprises a database for storing user profiles, wherein in the shown embodiment the database comprises a first storage unit 220 for storing user preferences and a second storage unit 230 for storing last search results of individual users.

The inventive method preferably comprises the following steps:
- taking a picture of the vehicle 500 using the mobile phone's camera 110 and extracting the location of the phone user 150 through either GPS or triangulation,
- sending the image 620 and the location information 630 in a query 600 to a user data interaction server 200, wherein in the shown embodiment the query 600 further comprises a user identification 610 and position information 640 relative to the car,
- back-end processing, which includes image processing, image recognition, and creation or modification of a user profile, wherein the identified vehicle model is added and/or user preferences are extracted based on the previous profile and the current car image captured,
- aggregation and creation of offers to the user 150 based on his or her location and profile,
- transmitting the result 700 to the mobile phone 100, wherein in the shown embodiment the result 700 comprises a list of item descriptors 710 and interaction adjustment commands 720, and
- presenting the result 700 on the mobile phone 100.

The main components of system accordingly comprise a mobile phone that is carried by a user, with or without GPS, a database containing information on models and makes of a majority of the cars in the market, a database containing user profile and preferences, and a back-end server that contains image processing and recognition capabilities and algorithms for content based and collaborative filtering.

The operation of the system essentially can be broken down into four tasks: taking a picture of a vehicle with the camera of a mobile phone, transmitting the image and context information from the mobile phone to a back-end server, back-end processing and transmitting results to the mobile phone of the user. Back-end processing further contains image pre-processing, feature extraction, feature matching, user preference handling and offer creation. Thus, the larger part of the architecture is within the back-end. However, if the device 100 is more powerful in terms of computing and battery power some of the back-end functionality with advantage can be pursued within the device 100, e.g., the image can be pre-processed and the feature extraction can be completed before performing the matching procedure in the back-end.

In the following the above tasks are described in more detail for an exemplary scenario.

### 1. Taking picture(s) of the vehicle and location extraction

Image(s) of the vehicle, location and identity are three important constituents of this task.

The service initiation from the mobile user starts with taking a picture or pictures of a car that is parked at a place. The pictures can be taken from various sides of the car. For example, the picture could be from the back of the car, or right side of the car, or left side of the car, or even from the front of the car. However, this does not exclude the scenario where the picture is taken on another day and at another location, and the service of scouting is then started, say after a week. In such a case, the system will accommodate both the time of the shooting and time of query and the same will be true of location and other tags of the image.

The UI (User Interface) 120 asks the user 150 to take a picture, with interactivity to provide one or more pictures. There are different ways in which such a GUI 120 could be implemented.

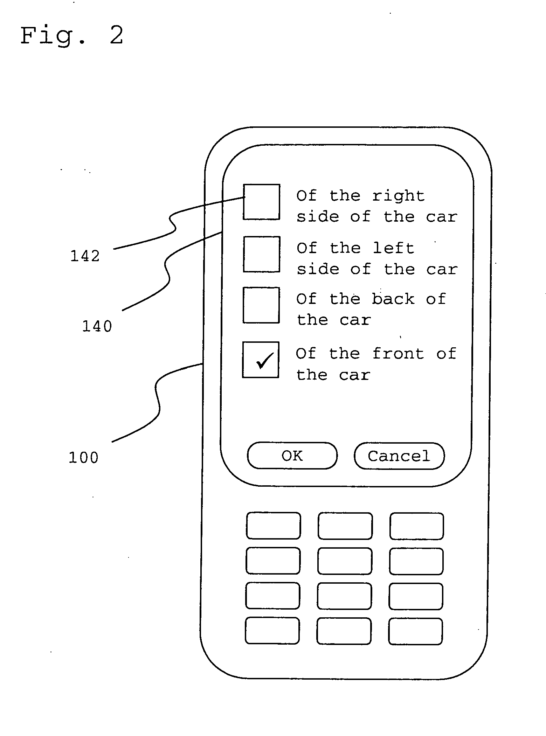

One example is shown in Fig. 2. In a first screen shown on a display 140 of the mobile phone 100 the user 150 is asked to take one or more pictures. The options shown in Fig. 2 comprise pictures of the right side of the car, of the left side of the car, of the back of the car and of the front of the car. The user checks the boxes 142 appropriately based on the pictures that he or she intends to provide to the service. There are many other ways to design a user interface 120, the user could for instance take the picture first and could then be asked the question about the type of picture he or she has taken, i.e. front, back, left or right side of the car.

Preferably the pictures are transferred as soon as each one of them is available, i.e., while the second picture is being taken, the transfer of the first image is in progress.

In addition, while the user is taking the pictures, the GPS locking preferably is in progress to achieve the current location of the user. If the phone is not equipped with a GPS receiver then location information is fetched through operator's support, if available through the device, for instance by triangulation.

Along with the image tags of the image such as time, device type, or the like are sent to the server. With special advantage the identity of the user is extracted to associate user's preferences.

The identity of the mobile user can exemplary be provided in three different ways: IMEI (International Mobile Equipment Identity), IMSI (International Mobile Subscription Identity) or MSISDN (User's phone number itself). These ways are allowed to accommodate for various methods in which different devices allow the identity extraction. Identity is useful to associate the user's history of vehicle images and also the associated profile, thus create his or her personal preferences.

### 2. Sending the image and location information

One mechanism for image recognition on a mobile or hand held device is to share the computational load between the device and a server. This way, after image acquisition of one or multiple images, partial processing can be pursued on the mobile device itself, before transmitting the content to the server. Such an approach results in a reduction of the overall turnaround time. However, the processing on a device will also consume power on that device. So, a balance in the distribution of processing is preferred.

In an exemplary implementation, the acquired image is re-sampled to reduce its size to 640x480 pixels, and when it is not possible to directly acquire a grayscale image, a color (RGB) to grayscale conversion is performed. To a large extent, this conversion reduces the amount of data to be transmitted to the server. Such a smaller sized image in grayscale is then transmitted to the server where recognition is performed.

With advantage also other kinds of pre-processing on the image data can be performed prior to transmission to the server. For instance, depending on the computational power of the mobile or hand-held device, it can be advantageous to detect the number plate, also known as license plate, of the vehicle, or to extract global and/or local feature descriptors. These reduced or processed image data or features are then transmitted to the server.

### 3. Back-end Processing

The core of image recognition is performed at the server due to computational and memory needs associated with this step. In the following the process is described in general.

Prior to any recognition tasks, first image histogram-equalization is performed to normalize intensities in the image. This is not a required step, however in most cases it helps to improve recognition rates.

The first step in the recognition process is extracting automatically detected image regions on which feature extraction is performed. Features used in an exemplary implementation are based on the SIFT (Scale-invariant feature transform) feature descriptor method. However, any other such as SURF (Speeded Up Robust Features) or PCA-SIFT (Principal Component Analysis-SIFT) could be used. Thereby essentially a simple descriptor for a small local region of the image invariant to scale or orientation is obtained.

Feature matching is the next key step in image recognition. The feature descriptors extracted from a query image are quickly matched with a database of potentially millions of features extracted a priori.

In order to describe the matching method, in the following also the feature database creation step is described, also referred to as the training phase of image recognition.

In order to create a database of images or objects to be recognized it is first started with a set of images per object. The features from every image of every object are extracted. These features are then labeled according to their source object and image IDs. Combining all the features of all the objects into one "bucket" to work out of, hierarchical clustering is then performed. Clustering can either be as simple as classical k-means, where the number of classes if fixed to k, or something more sophisticated can be used to automatically detect the number of classes given a set of features.

The hierarchical clustering gathers similar features together into one group while separating the others into different groups. Then, features in every single group are subsequently clustered recursively to create a hierarchical representation for all features from all objects.

Next the hierarchical "tree" of features is labeled in order to encode occurrence statistics for every "group" or "node" of the tree. Every tree-node thus tells which object has a feature most similar to it and also its "distance" or similarity as well as statistics on occurrence. This is used during the matching process described next.

The server can receive either the processed image or even just the set of features to reduce the required bandwidth. When the server receives an image, image processing steps are applied to extract from it automatically the feature descriptors.

For every feature descriptor extracted, it is traversed down the hierarchical tree structure created during the training process to find the path through the nodes and at every step the list of objects is noted that share this kind of descriptor. Thus, for every feature not only the set of potential objects it belongs to is computed, but also a score indicating likeliness or accuracy.

By summing the score for the computed list of possible objects, then the candidates are sorted in decreasing order of likelihood. This is the final set of possible recognized objects.

It should be noted that the approach is not restricted to the creation of what is called "vocabulary trees" alone. Any method for feature matching can be used without changing the nature of image recognition.

For creating and/or extracting user preferences the recognized model and make of the car are added to the service repository, which stores a profile record for each user. The profile record contains the following exemplary attributes:
i) A unique ID of the user which can be related to one or more International Mobile Equipment Identity (IMEI), International Mobile Subscriber Identity (IMSI) or Mobile Station Integrated Services Digital Network Number (MSISDN)
ii) List of models & makes identified from earlier images captured by the same user.
iii) List of user's choice such as price range, e.g. $5000 - $8000, make of the year range, e.g. 2003 - 2009 built, mileage range, e.g. 30,000 - 50,000, fuel types, e.g. gasoline or hybrid or electric only, car body style, gearbox type, power/performance range, color, etc. made while using the service. The list can be ordered by priority of the attributes.
iv) List of related services the user wishes to use. Related services can for instance be newsletter or news feed subscriptions, location based notifications about interesting offers or advertisement, or social network participation.

If there is no existing profile record of the user then a new record is created and enhanced after the first use of the service. The enhancement takes place each time an identified user enters the proposed system and starts a service session either explicitly through the user entering his preferences in a form or implicitly derived from the user's activity during interaction with the service.

The service repository provides a network based secured access to other system components in order to keep the users privacy and protect his profile from unauthorized usages.

Given the agreement of the user to receive offers based on his user profile the system offer creation module analyzes a user profile record to find relevant offers inside the offer repository that match one or more attributes of the users profile. The best matches are ranked higher depending on the number of matched attributes and their relevance related to the user's priority.

### 4. Results to the mobile user

After the previous task, a list of offerings is created. These are sorted based on the distance of the user from the seller of the car, or sorted based on the closest match to the user's choice first. These offerings preferably are further linked to the seller address with navigation information and/or contact information including phone number(s).

The invention advantageously provides a mobile service for scouting cars, using mobile devices. On the service provider side, the scouting translates to offerings based on customers' preferences, and/or vehicles close to the customer's preferences. Thus, the offerings are tied to customers' context.

Car purchase has historically been tied up to an exhaustive scouting process, yet there are instances where consumers prefer a car they see while passing by, for instance when walking through a parking lot, or they like some car that is going by on the street. Typically the choice is made in a few seconds though the process seems for hours. Fetching more information about a vehicle in such a scenario is enabled by the invention and is very useful for both the consumers and car sellers.

Consumers gain tremendously, since they can simply take a picture of the vehicle and gain access to all the information related to that vehicle and/or at least the make and model instantly. With special advantage further information about the sellers in nearby geographical area and their offerings, with appropriate price comparison is provided. A filter on top of such results based on user preferences additionally increases the usefulness of the service. While the filtering mechanism is one of the ways where the onus is on the user to provide additional information, the invention also enables a recommendation engine based on content-based and/or collaborative filtering which leads to even better results. Thus, the invention brings benefits to all the parties involved in a car scouting process.

## Claims

1. A system (10) for providing object-related information (710), comprising
- a mobile communication device (100) having a camera (110),
- a query processing device (200, 300) connectable to said mobile communication device (100) via a communication network, and
- a first database (400) comprising object-related information of objects belonging to pre-defined object classes, wherein said first database is accessible by said query processing device (200, 300), wherein
the mobile communication device (100) is adapted for transmitting a query (600) to the query processing device (200, 300), wherein said query (600) comprises image information (620) which comprises at least one captured image or a pre-processing result of at least one captured image, and wherein
the query processing device (200, 300) comprises
- query processing means (210) for processing a query received from the mobile communication device (100),
- image processing means (310) which is adapted to recognize an object as belonging to an individual object class based on image information (620), and
- information retrieval means (210) adapted for accessing said first database, retrieving object-related information (710) of objects belonging to said individual object class and providing the retrieved object-related information (710) to the mobile communication device (100).

2. The system of claim 1, wherein the objects (500) are vehicles, the object classes are vehicle models and the object-related information (710) comprises sales information of at least one vehicle.

3. The system of any one of the preceding claims, wherein the mobile communication device (100) is adapted for pre-processing at least one captured image and for transmitting image information which comprise the result of said pre-processing.

4. The system of any one of the preceding claims, further comprising a second database (220, 230) for storing user-related information, wherein the information retrieval means (210) is adapted for
- accessing said second database in response to a user identification (610) in a query (600),
- retrieving from said second database individual user-related information based on the user identification, and
- selecting and/or filtering the object-related information (710) to be provided to the mobile communication device (100) based on the individual user-related information.

5. The system of claim 4, wherein said user-related information comprises user-specific preferences and/or a history of results of previous user-specific queries.

6. The system of any one of the preceding claims, wherein the mobile communication device (100) is adapted to generate image-related information, a query (600) comprises said image-related information (630, 640), and the
information retrieval means (210) is adapted for selecting and/or filtering the object-related information (710) to be provided to the mobile communication device (100) based on the image-related information (630, 640).

7. The system of claim 6, wherein said image-related information (630, 640) comprises information (630) on the absolute location of the mobile communication device (100) at the time an image was captured and/or information (640) on the location of the mobile communication device (100) relative to an object of which an image is captured.

8. A method for providing object-related information, comprising the steps of
- providing a mobile communication device (100) having a camera (110),
- capturing at least one image of at least one first object with said mobile communication device (100),
- transmitting a query which comprises image information from the mobile communication device to a query processing device, wherein said image information comprises the at least one captured image or a result of pre-processing the at least one captured image,
- processing the transmitted image information to determine an estimated object class to which the first object belongs,
- retrieving object-related information of at least one second object belonging to the determined object class from a first database, and
- transmitting said object-related information to the mobile communication device.

9. The method of claim 8, wherein the first and second objects (500) are vehicles, the object class is a vehicle model and the object-related information (710) comprises sales information of at least one vehicle.

10. The method of any one of claims 8 or 9, wherein at least one captured image is pre-processed by the mobile communication device (100) and image information which comprises the result of said pre-processing is transmitted.

11. The method of any one of claims 8 to 10, further comprising the steps of
- storing user-related information in a second database,
- retrieving from said second database individual user-related information based on a user identification (610) provided in a query (600), and
- selecting and/or filtering the object-related information (710) to be transmitted to the mobile communication device (100) based on the individual user-related information, wherein said user-related information in particular comprises user-specific preferences and/or a history of results of previous user-specific queries.

12. The method of any one of claims 8 to 11, further comprising the steps of
- generating image-related information by the mobile communication device (100),
- transmitting a query which comprises said image-related information from the mobile communication device to the query processing device, and
- selecting and/or filtering the object-related information (710) to be transmitted to the mobile communication device (100) based on the image-related information (630, 640).

13. The method of claim 12, wherein said image-related information (630, 640) comprises information (630) on the absolute location of the mobile communication device (100) at the time an image was captured and/or information (640) on the location of the mobile communication device (100) relative to an object of which an image is captured.

14. A query processing device (200, 300) comprising
- query processing means (210) for processing a query received from a mobile communication device (100), wherein said query comprises image information,
- image processing means (310) which is adapted to recognize an object as belonging to an individual object class based on said image information (620), and
- information retrieval means (210) adapted for
- accessing a first database (400) which comprises object-related information of objects belonging to pre-defined object classes,
- retrieving object-related information (710) of objects belonging to said individual object class, and
- providing the retrieved object-related information (710) to the mobile communication device (100).

15. A mobile communication device (100), comprising
- a camera (110) for capturing images,
- a user interface (120) for entering at least one parameter related to an image and/or for providing instructions to a user for capturing an image, and
- means for transmitting a query (600) to a query processing device (200, 300), wherein said query (600) comprises image information (620) which comprises at least one captured image or a pre-processing result of at least one captured image.
